# EUROPEAN PATENT APPLICATION

(11) **EP 3 409 969 A1**
(43) Date of publication of application: **05.12.2018**
(21) Application number: 18175489.6
(22) Date of filing: 01.06.2018
(51) Int. Cl.: F16D 65/092, F16D 65/097

(54) **A BRAKE PAD**

(30) Priority: 02.06.2017 GB 201708864; 12.09.2017 GB 201714674; 29.11.2017 GB 201719874
(71) Applicant: Meritor Heavy Vehicle Braking Systems (UK) Limited, Cwmbran, Gwent NP44 3XU (GB)
(72) Inventor: Knoop, Dietmar, Cwmbran, Gwent NP44 3XU (GB)
(74) Representative: Foot, Paul Matthew James

(57) **Abstract**

A brake pad for a heavy vehicle disc brake, the brake pad (211a, 211b) comprising a layer of friction material (13) having a friction face for contacting and retarding rotation of a rotor (10), the brake pad (211a, 211b) defining a first circumferential surface (277a) and a second (277b) opposing circumferential surface for contact with first (272a) and second (272b) corresponding circumferential pad abutment surfaces of first and second pad abutment structures of a disc brake in use;
the brake pad (211a,211b) further comprising first and second resilient arms (282a, 282b) projecting in a generally circumferential direction from the friction material and being arranged to contact the first and second corresponding pad abutment structures so as to urge the brake pad (211a, 211b) in a direction away from the rotor (10) when the brake pad is urged towards the rotor during application of the brake.

## Description

### FIELD OF THE INVENTION

The present invention relates to a brake pad. More particularly, the present invention relates to a brake pad for a heavy vehicle.

### BACKGROUND OF THE INVENTION

Commonly, air actuated heavy vehicles disc brakes do not have mechanisms that actively retract the brake pads once a braking operation is complete. Instead such brakes typically rely on the brake rotor to be slightly uneven or have a degree of runout and therefore to "push" the pads back to a rest position. However in many situations a residual amount of drag between the pads and the rotor may remain especially with a sliding caliper design. This may increase wear of the pad friction material and have a negative effect on the fuel economy and emissions of the vehicle upon which the disc brake is fitted.

For light vehicles it is known to provide resilient elements to actively retract brake pads once a braking operation is complete. Examples of these include US2014/0367208 (Nissin Kogyo) and US2973837 (Wilson). However these arrangements are relatively complex and are not practically applicable to heavy vehicle brakes which utilise different pad mounting arrangements and require a greater degree of relative movement to account for wear of friction material over the life of the pads.

The present invention seeks to overcome, or at least mitigate the problems of the prior art.

### SUMMARY OF INVENTION

One aspect of the present invention provides a brake pad for a heavy vehicle disc brake, the brake pad comprising a layer of friction material having a friction face for contacting and retarding rotation of a rotor, the brake pad defining a first circumferential surface and a second opposing circumferential surface for contact with first and second corresponding circumferential pad abutment surfaces of first and second pad abutment structures of a disc brake in use; the brake pad further comprising first and second resilient arms projecting in a generally circumferential direction from the friction material and being arranged to contact the first and second corresponding pad abutment structures so as to urge the brake pad in a direction away from the rotor when the brake pad is urged towards the rotor during application of the brake.

Advantageously this arrangement enables the brake pad to be retracted after a brake application force has been removed. This reduces residual drag between the pad and the rotor and may reduce pad wear, improve the fuel economy and reduce emissions of the vehicle to which it is fitted.

At least one of the first and second resilient arms may comprise a generally radially extending torsion portion arranged to provide torsional resilience to urge the brake pad away from the rotor.

Advantageously, the use of torsional resilience in arm may result in a more constant spring rate across the full range of deflection of the arm as the brake pad advances towards a brake rotor. In addition it may reduce stresses in the arm and allow for a more compact way of achieving the required deflection of the arm.

Whilst certain springs with helically wound wire may be referred to as torsion springs, it should be noted that in this case as the torsion portion is not linear, extending in a radial direction, the wire does not act in a truly torsional (i.e., twisting) action.

The radially extending torsion portion may overlie the brake pad.

Optionally, the radially extending torsion portion is located beyond the extent of the brake pad.

Optionally, at least one of the first and second resilient arms comprises first and second circumferentially extending portions mounted to the brake pad for pivoting about first and second axes offset in a generally circumferential direction and wherein the torsion portion connects the circumferentially extending portions at a location remote from both axes.

Advantageously, this arrangement provides an effective way for torsion to be generated without necessarily requiring additional material to restrain the resilient arms and generate the torsion.

Optionally, the torsion portion is located at an opposite end of the circumferentially extending portions from the first and second axes.

Advantageously, this arrangement enables the torsion portion to also act as the contact portion with the abutment surfaces of the carrier, and thereby reducing the risk of excess wear of the resilient arms and/or carrier.

Optionally, the at least one resilient arm further comprises a mounting portion arranged to mount the resilient arm to the brake pad.

Optionally, the mounting portion defines an axle extending in the same direction as the axis of rotation of the circumferentially extending portion.

The brake pad may further comprise a reaction portion arranged to ground a first end of the torsion portion on the brake pad.

Providing such a portion allows the torsional forces to be reacted conveniently within the brake pad.

Two torsion portions may be provided.

The use of two torsion portions may further reduce stresses and/or enable thinner arms to be used.

The reaction portion optionally connects the two torsion portions.

This arrangement enables a single component to provide the arms at one circumferential side of the brake pad.

The two torsion portions are optionally substantially coaxially aligned.

The brake pad may further comprise a backplate secured to a face of the friction material opposing the friction face so as to increase the flexural strength of the brake pad. The first and second resilient arms are optionally mounted to the backplate.

The mounting of the resilient arms to the backplate provides a strong and secure connection to the brake pad.

The brake pad may have a rear face opposing the friction face and the rear face comprises a recess therein, the recess at least partially accommodating at least part of at least one of the resilient arms.

By having a recess in the backplate, the overall thickness of the clamp mechanism is minimised, thereby maximising the available thickness of friction material to prolong pad life.

The recess may be dimensioned such that at least one of the resilient arms is held to the recess a form fitting relationship, e.g. an interference fit.

This arrangement may allow the assembly of the arm to the brake pad without the use of additional components such as fasteners, thereby reducing manufacturing complexity and cost.

The recess may be plastically deformed so as to hold the at least one arm therein.

This arrangement may also allow the assembly of the arm to the brake pad without the use of additional components such as fasteners, thereby reducing manufacturing complexity and cost.

The at least one resilient arm may be shaped for resiliently mounting to the recess.

This arrangement may also allow the assembly of the arm to the brake pad without the use of additional components such as fasteners, thereby reducing manufacturing complexity and cost.

The backplate may comprise an aperture and the at least one arm is held within the aperture.

This arrangement may also allow the assembly of the arm to the brake pad without the use of additional components such as fasteners, thereby reducing manufacturing complexity and cost.

The aperture may be a through aperture in the backplate from a non-friction side to a friction side of the backplate.

The aperture may be defined by an additional component, e.g. a plate, mounted to the backplate.

The recess and the arm may be dimensioned such that the portion of the arm accommodated by the recess does not project beyond the rear face of the brake pad.

This further minimises the thickness of the brake actuation/clamp mechanism overall.

The recess may comprises a stiffening rib of the backplate.

By accommodating the resilient arm and acting as a stiffening rib, the pad is strengthened without adding to the thickness of the clamp mechanism.

The backplate may comprise a plurality of stiffening ribs and the arm is formed so as to be at least partially accommodated in recesses defining the stiffening ribs.

This provides a convenient arrangement for mounting the arm to the backplate.

The stiffening rib may extend generally circumferentially across the full width of the backplate and the first and second arms may be formed from a single piece of material at least part of which is accommodated in the recess.

This arrangement provides a convenient mounting arrangement of the arms and also enables the arms to deflect sufficiently to enable retraction even when the brake pad is nearly fully worn.

Two stiffening ribs optionally extend the full width of the backplate and the arms may be formed from a single piece of material at least part of which is accommodated in the two stiffening ribs.

This arrangement allows the arm to be looped around thereby stabilising the pad retraction operation.

Optionally, the backplate is formed from a plate having a thickness across a majority of its surface in a range of 5mm to 12mm, preferably 7mm to 11mm wherein the recess is at least 3mm thinner than a remainder of the plate.

The arms may comprise wire material e.g. having a circular cross-section, at least in part.

This cross-section may be easily manufactured from the wire and accommodated in a recess.

The arms may comprise sheet material, at least in part.

This arrangement may enable the arms to be manufactured easily and have a minimal thickness.

At least one of the arms may comprise a region of increased surface area for contact with the corresponding abutment structure.

Advantageously this may reduce stress in the arm in this region.

At least one of the arms may be mounted to the brake pad by at least one of welding, gluing, riveting, press fitting, clip-fitting, snap fitting, plastic deformation of one or both of the arms or brake pad to cause physical engagement therebetween or brazing.

At least one arm may be integral and monolithic with the same piece of material as the backplate.

By manufacturing and providing the or each arm as an integral and monolithic part of the same piece of material as the backplate, further cost and/or weight savings may be achieved.

The backplate may be formed from sheet metal material.

A backplate of this type may be easily formed with stiffening ribs and other features.

The backplate optionally comprises a rear plate supporting the friction material and a peripheral flange extending around the perimeter of the rear plate and arranged substantially normal thereto.

A second aspect of the present invention provides a heavy vehicle disc brake incorporating a brake pad according to the first aspect of the present invention.

A third aspect of the present invention provides a heavy vehicle disc brake incorporating a first and second brake pad according to the first aspect of the present invention disposed on opposing sides of a brake rotor.

The heavy vehicle disc brake may comprise a caliper having a support portion arranged to support a rear face of the brake pad during a braking operation, the portion having a recess in a region of at least one of the first and second arms arranged so as to receive the arm as the brake pad advances towards the friction material and the arm is caused to deflect.

The caliper may comprise a bridge portion arranged to extend over a brake rotor and support an outboard brake pad, and wherein the support portion is a surface of a bridge portion arranged to face the rotor.

A further aspect of the present invention provides brake carrier for a heavy vehicle disc brake, the brake carrier comprising first and second brake pad abutment structures, each defining a circumferential pad abutment surface to take the load from a brake pad during a braking operation, wherein the brake pad abutment structures further comprise a resilient arm arranged to engage a corresponding brake pad so as to urge the brake pad in a direction away from the rotor when the brake pad is urged towards the rotor during application of the brake

Mounting the arms to the carrier may provide a suitable alternative way to provide pad retraction functionality with many of the associated benefits as described in relation to the first aspect of the present invention.

The resilient arms may be mounted to the carrier abutments in one of the ways described in respect of the first aspect of the present invention for mounting the arms to a brake pad.

The resilient arms may be manufactured using similar materials and shaped similarly to the arms of the first aspect, but with the orientations reversed.

The carrier may additionally comprise a brake pad mounted therein, and the arms may be arranged to extend over and engage a formation in the brake pad that enables the arms to engage and resiliently retract or "pull" the pad away from a rotor of the associated disc brake in operation.

The formations may be hook shapes formed into a backplate of the brake pad.

The arms may be as described in relation to the first aspect of the present invention and may be resilient in torsion and/or bending to urge the pad to retract.

### BRIEF DESCRIPTION OF DRAWINGS

Embodiments of the present invention will now be described, by way of example only, with reference to the drawings in which:
Figure 1 is an isometric view of a disc brake, according to an embodiment of the present invention;
Figures 2 and 3 are side views of a brake pad and carrier of the disc brake of Figure 1 in a part-fitted and fitted position respectively;
Figures 4 and 5 are isometric views of a brake pad of the disc brake of Figure 1 from opposing directions;
Figure 6 is a cross-sectional view through the brake pad of Figures 4 and 5 on a plane 6-6;
Figure 7 is an isometric view of a backplate of the brake pad of Figures 4 to 6; and
Figure 8 is an isometric view of a brake pad of the present invention mounted to a carrier of disc brake.
Figure 9 is a cross section through the brake pad of Figure 8 on the plane 9-9.
Figures 10 and 12 are isometric views of a brake pad according to second and third embodiments of the present invention;
Figures 11 and 13 are cross sections through the brake pads of Figures 10 and 12 on the planes 11-11 and 13-13 respectively;
Figures 14, 15 and 16 are views of a portion of brake pads according to fourth, fifth, and sixth embodiments of the present invention respectively;
Figures 17 and 18 are side and perspective views of a portion of a brake pad according to a seventh embodiment of the present invention;
Figures 19 and 20 are side and cross-sectional views of a portion of a brake pad according to an eighth embodiment of the present invention;
Figure 21 is a cross-section on the plane 21-21 of Figure 14 illustrating one way of mounting an arm to a backplate;
Figures 22A, 22B and 22C are cross-sections at a similar location to Figure 21, but showing an alternative way of mounting the arm;
Figure 23 is a cross sectional view through a portion of a heavy vehicle disc brake in the location of plane 23-23 of Figure 1, but in which the disc brake has a carrier extending to an outboard side of the rotor and supporting the outboard brake pad circumferentially;
Figure 24 is a view looking outboard of a support portion of a caliper bridge of Figure 23 arranged to support a rear face of the outboard brake pad;
Figures 25 and 26 are side and plan views of a portion of a backplate of a brake pad according to a ninth embodiment of the present invention;
Figure 27 is an isometric view of a backplate of a brake pad according to a tenth embodiment of the present invention;
Figure 28 is an enlarged view of the circled portion of Figure 27;
Figure 29 is an isometric view of the reverse of the backplate of Figure 27;
Figure 30 is an isometric view of a brake pad incorporating the backplate of Figure 27 mounted in a brake carrier;
Figure 31 is a plan view of the brake pad and carrier of Figure 30;
Figures 32 and 33 are similar views to those of Figures 30 and 31, but with the brake pad in a position that would be adopted when it is fully worn;
Figure 34 is an isometric view of a portion of a backplate similar to that circled in Figure 27 according to an eleventh embodiment of the present invention;
Figure 35 is an isometric view of a portion of a backplate similar to that circled in Figure 27 according to a twelfth embodiment of the present invention;
Figure 36 is an isometric view of a portion of a further backplate similar to that circled in Figure 27 according to a thirteenth embodiment of the present invention.
Figure 37 is a side view of a portion of a brake pad according to a fourteenth embodiment of the present invention;
Figures 38 and 40 are side views of a portion of a brake pad illustrating alternate ways of mounting a resilient arm thereto;
Figures 39 and 41 are cross-sectional views on the planes 38-38 and 40-40 of Figures 38 and 40 respectively; and
Figure 42 is a side view of another way of mounting a resilient arm to a brake pad.

### DETAILED DESCRIPTION

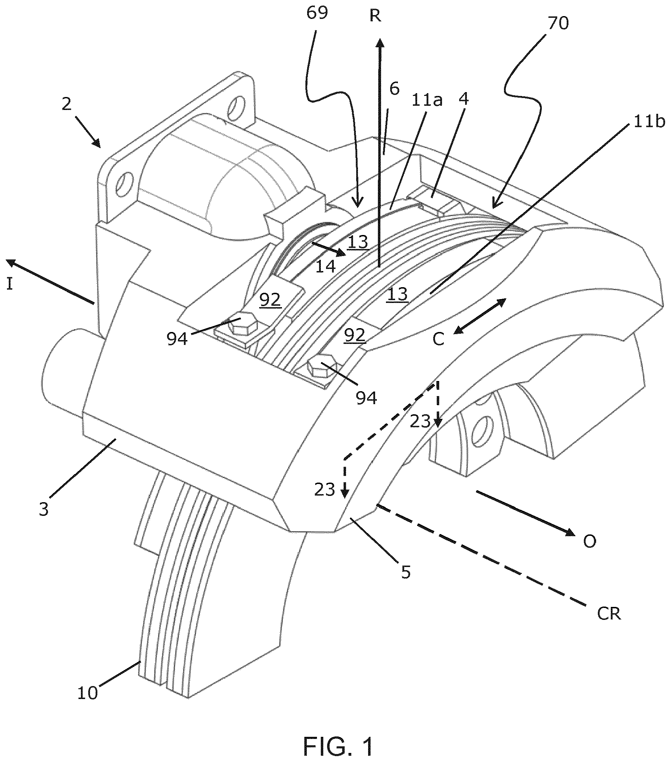

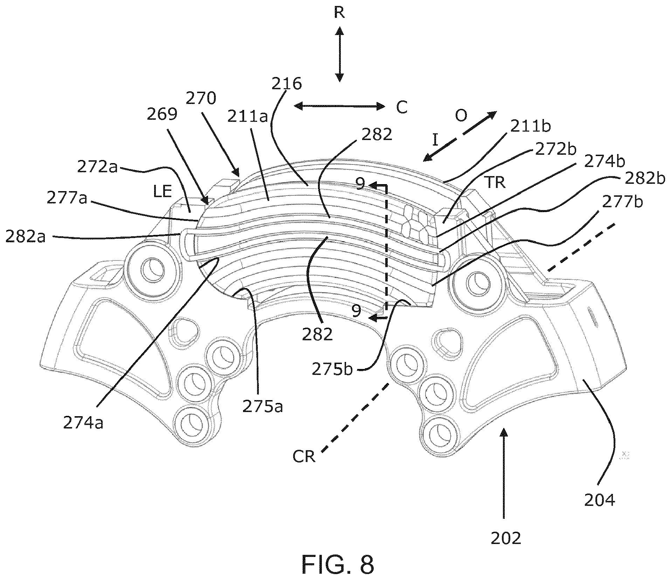

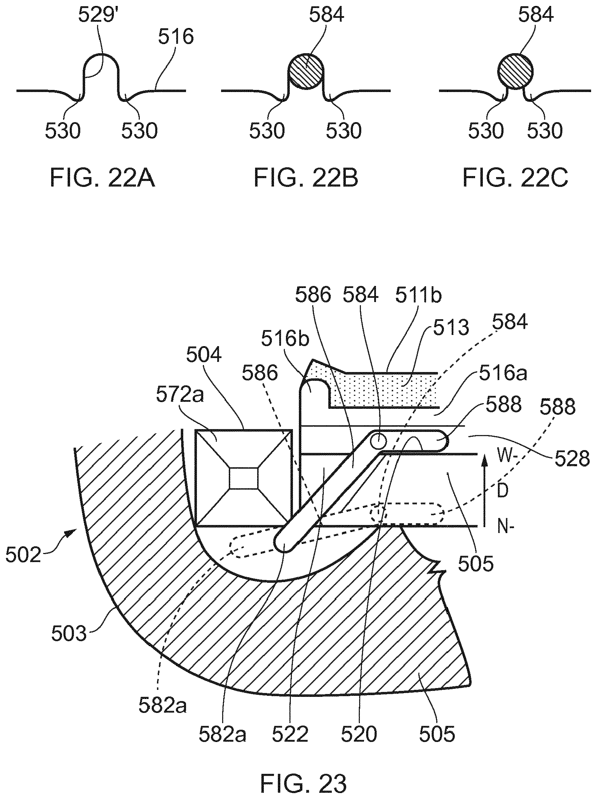

Figure 1 illustrates a disc brake 2 of an embodiment of the present invention into which brake pads of the embodiments of Figures 8 to 19 may be fitted. The disc brake 2 incorporates an actuation mechanism (not visible) comprising a single piston and which is suitable for a commercial vehicle. This type of brake is particularly suitable for lighter duty heavy vehicles, for example smaller trucks, or a trailer of a tractor-trailer combination. In other embodiments the disc brake may be a twin piston brake - for example a variant of the applicant's existing ELSA 2 family of disc brakes, or may have a carrier that supports an outboard brake pad as discussed in more detail in relation to Figure 23 below.

Various orientations of the disc brake are described. In particular the directions inboard and outboard refer to the typical orientation of the disc brake when fitted to a vehicle and with reference to the longitudinal centre line of the vehicle. In this orientation the brake pad closest to the centre of the vehicle is the pad directly actuated by an actuation mechanism and being the inboard pad, and the outboard pad being one mounted to a bridge portion of the caliper. Thus inboard can be equated with an actuating side of the disc brake, and outboard with a reaction side. The terms radial (denoted by arrow R) describes an orientation with reference to the centre of the wheel (rotor). Circumferential (denoted by arrow C), or also called tangential, describe orientations with respect to the brake rotor. Radial refers to a direction towards or away from the centre of rotation of the brake rotor, whereas circumferential (C) describes a direction of rotation of the rotor about its centre of rotation (denoted CR).

The disc brake 2 comprises a caliper 3 having a housing 6 to accommodate the actuation mechanism and which is slideably mounted on a carrier 4 for movement in an inboard-outboard direction. The caliper also comprises a bridge that extends over the rotor 10 support the outboard brake pad 11b. The bridge 5 in combination with the sliding of the caliper enables the force from the operating shaft to be transmitted to the outboard brake pad 11b so as to clamp the rotor 10 between the inboard and outboard brake pads 11a, 11b so as to retard its rotation.

The caliper 3 can slide on the carrier 4 in an inboard-outboard direction, by way of first and second guide pins (not shown) as is well known.

An inboard brake pad 11a comprises a layer of friction material 13 and is arranged so that the friction material 13 faces a brake rotor 10 (also known as a brake disc). The inboard brake pad 11a is mounted on the carrier via an inboard brake pad support structure 69. In this embodiment, the inboard brake pad support structure 69 is a window or recess in brake carrier, described in more detail below. The inboard brake pad 11a is moveable in the direction of arrow 14 against the brake rotor 10.

An outboard brake pad 11b, also with a layer of friction material 13, is also provided. The outboard brake pad 11b is mounted to an outboard brake pad support structure 70 as described in further detail below. Suitable means are provided to urge an outboard brake pad 11b against the opposite side of the rotor 10. In this embodiment, the caliper comprises a bridge 5 arranged so as to straddle the rotor 10 and to transmit the reaction force from an inboard operating shaft (not shown) of the actuating mechanism to the outboard pad 11b. In this embodiment the housing 6 and bridge 5 are manufactured as a single monolithic casting, but in other embodiments, the bridge may be bolted or otherwise secured to the housing.

In this embodiment, a spreader plate (not visible) is provided in the form of an enlarged outboard head of the piston. The main function of the spreader plate is to spread the load applied by the single piston across a greater proportion of the circumferential width of the inboard pad 11a, which is particularly useful for high pressure applications (e.g. an emergency stop), to more evenly distribute the load applied to the pads. There is also an effect on wear; i.e. wear closer to the centre of the pad (where the piston is applied) can be reduced, to provide a more even distribution of wear.

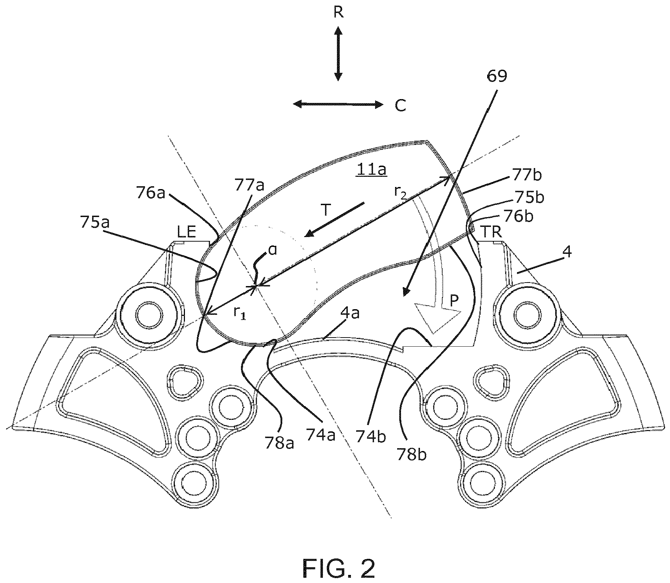

With reference to Figure 2, the carrier 4 has radial pad abutment surfaces 74a, 74b to support the inboard pad 11a in a radial direction. The radial abutment surfaces 74a, 74b are located either side of an arched 'link' portion 4a of the carrier, the link portion 4a connecting the left and right sides of the carrier 4.

The carrier 4 further comprises a first and second circumferential pad abutment surfaces 75a and 75b. The radial pad abutment surfaces 74a, 74b and circumferential pad abutment surfaces 75a and 75b are machined in this embodiment, but they could be forged, or just left as cast as desired.

The circumferential and radial pad abutment surfaces 74, 74b, 75a and 75b define the inboard pad support structure 69 that is arranged to support the inboard pad 11a in a radially inward and circumferential (i.e. rotational) direction. As the brake is actuated, the abutment surfaces 74a, 74b, 75a and 75b react the torque that is created as the inboard pad 11a clamps the rotor 10. The abutment surfaces also act to locate the inboard brake pad 11a.

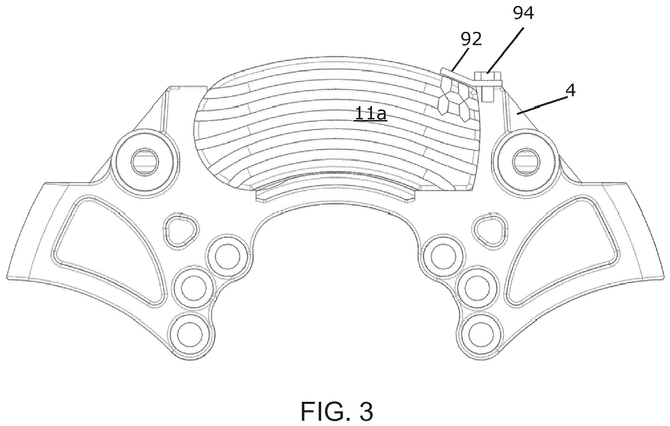

The inboard brake pad 11a and the corresponding inboard pad support structure 69 comprise complementary profiles on circumferential faces thereof arranged so as to permit the brake pad to be inserted into the mounting structure in a transverse direction T of the brake pad 11a and at an angle to the circumferential direction C of the structure until the pad abuts the first circumferential abutment surface 75a, and then for the brake pad to be pivoted in a direction P about a fixed centre of rotation X when the first circumferential surface 77a of the brake pad is in contact with the first circumferential abutment surface 75a of the structure to be brought into a fitted position in the structure. The fitted position is shown in Figure 3.

In this embodiment, the first circumferential surface 77a of the inboard brake pad 11a has a profile that defines a part circular segment of a first fixed radius r₁ for contact with the complementary first circumferential abutment surface 75a. It will also be appreciated that in this embodiment a first radial surface 78a of the brake pad is partially contiguous with the first circumferential abutment surface 77a. In other words, because the surface is curved it transmits force with both a circumferential and radial component in some locations.

In addition, the first circumferential abutment surface 75a extends around the first circumferential surface of the inboard brake pad 11a such that a gap distance from the radially outermost tip 76a of the first circumferential abutment surface 75a to the corresponding tip 76b of the second circumferential abutment surface 75b is less than the greatest distance between corresponding points on the two circumferential abutment surfaces 75a, 75b radially inward of the tips. In other words a portion of the first circumferential abutment surface 75a radially outward of the brake pad extends above a portion of the brake pad 11a at the first end thereof.

This means that in effect the brake pad is accommodated within a curved undercut defined by the first circumferential abutment surface 75a. This prevents the brake pad 11a being lifted from the inboard pad support structure 69 by it pivoting about the second end of the brake pad, rather than about the first end of the brake pad i.e. only fitting and removal in the way described below is possible when the disc brake 2 is assembled.

The second circumferential surface of the brake pad 77b has a profile that also defines a part circular segment of a second fixed radius r₂. The second fixed radius is greater than the first fixed radius and is arranged to contact the complementary second circumferential abutment surface 75b, which is also part-circular with a similar radius.

In order that the brake pad 11a, when fitted, has a large bearing area in contact with the second circumferential abutment surface 75b for transmitting the brake force under braking, the centre of the second radius r₂ substantially coincides with the centre α of the first radius r₁.

In this embodiment, the second radial surface of the brake pad 78b has a generally planar profile and is arranged to contact the complementary second radial abutment surface 74b, which is also generally planar.

The second radial abutment surface 74b, in contrast to the first, is arranged with a defined angle at its intersection to the second circumferential abutment surface 75b, in order to support the brake pad in a radially inward direction at its second end. In some variants of the carrier (not shown) a stress-relief feature may separate the second radial and circumferential abutment surfaces 74b, 75b, however.

The first circumferential abutment surface 75a is arranged on a leading side (denoted LE) of the disc brake with respect the usual direction of rotation of the rotor 10 (clockwise in Figure 2). The second circumferential abutment surface 75b is arranged on the trailing side (denoted TR). Thus, in the forward direction of movement of a vehicle to which the disc brake 2 is fitted, the forces acting on the brake pad 11a tend to hold the brake pad within the pad support structure without additional retention structures coming into use.

However, since vehicles typically also manoeuvre in a reverse direction (at low speed and for a small proportion of their operating time), the geometry set out above may require a structure to counteract the forces acting on the brake pad 11a when rotation of the rotor 10 is reversed. Thus, as is shown in Figure 3, a pad retainer in the form of a plate 92 is provided, which extends from the second circumferential abutment 75b over part of the radially outer face of the brake pad 11a. A bolt 94 (or other appropriate fastening component) passes through the plate 92 and into a threaded bore in the carrier 4, to releasably secure the plate 92 in place.

In the disc brake 2 of Figure 1 the outboard pad support structure 70 is arranged so as to have a similar geometry of radial and circumferential abutment surfaces 74a, 74b, 75a, 75b in order to receive and support an outboard brake pad 11b with similar or identical shape to the inboard brake pad 11a. In other embodiments, the outboard pad may have a different geometry and this may be advantageous in some circumstances, dependent upon functional requirements of the brake and/or whether some form of "poka-yoke" feature (foolproofing of fitting of pads in inboard and outboard locations) is to be provided.

Thus a fitting operation of the outboard brake pad 11b is similar to that of the inboard brake pad 11a. However, whilst the inboard brake pad 11a is mounted on the carrier 4 of disc brake 2 via the inboard brake pad support structure 69 the outboard brake pad 11b is mounted to the bridge 5 of the caliper 3 by the outboard brake pad support structure 70. As such, the outboard brake pad 11b is supported radially and circumferentially by the caliper 3 when fitted in the outboard brake pad support structure 70. The equivalent radial and circumferential abutment surfaces of the outboard brake pad support structure 70 are provided in a face of the bridge 5 that is adjacent the rotor 10. However, as the position of the outboard pad 11b is fixed inboard-outboard with respect to the bridge 5, the abutment surfaces do not need to be as deep inboard-outboard as in the carrier 4, e.g. they may only be as deep as the corresponding circumferential and radial surfaces on the outboard brake pad 11b

So as to maintain the benefit of the outboard brake pad 11b being inherently retained in the outboard pad support structure 70 in the normal rotational direction, in this embodiment, the inboard and outboard brake pads 11a, 11b are shaped such that when facing each other in a parallel relationship with friction material facing friction material, the brake pads have mirror symmetry about a plane parallel to friction faces of the brake pads and rotor 10. Thus, when fitted within the disc brake 2 as illustrated in Figure 1, the pads have mirror symmetry about a plane normal to the centre of rotation CR of the rotor 10 at the axial midpoint of the rotor.

This arrangement means that the pad retaining plate 92 for the outboard brake pad 11b is at the same trailing side of the pad as for the inboard brake pad, but is instead secured in a threaded bore on the bridge 5. A benefit of this pad shape is that it inherently provides a poka-yoke feature that prevents an individual pad being fitted in a reversed orientation within its corresponding support structure (i.e. with the backplate rather than friction material facing the rotor.

The friction material 13 of the brake pads 11a and 11b is mounted to a strengthening backplate 16 e.g. of metallic material. The friction material 13 at the circumferential surfaces of the backplate follows substantially the same profile as the backplate 16. However for manufacturing reasons the friction material is stepped in from the entire perimeter surface by up to 4mm. This arrangement optimises the weight to friction material volume ratio of the brake pads, which is made possible by the simple pad retention arrangement in particular. The profile of the friction material and the backplate on the radially outermost and radially innermost edges (intermediate radial surfaces 78a, b) follows as closely as possible the contact area of the rotor so as to maximise the swept pad area.

Fitting of either brake pad 11a, 11b into the caliper is a simple matter of inserting the brake pad into the mounting structure in a transverse direction T of the pad and at an angle to the circumferential direction of the structure and then pivoting the brake pad about a fixed centre of rotation when a circumferential surface of the brake pad is in contact with a complementary circumferential surface of the structure until the brake pad is brought into the fitted position in the structure in which the second radial surface 78b of the brake pad rests on the second radial pad abutment surface 74b. The pad retainer plate 92 may then be secured over the pad 11a, 11b by tightening down the bolt 94. Removal is achieved by the reverse procedure.

The construction of the backplate is now discussed in more detail in relation to Figures 2 to 7. The strengthening backplate 16 of the brake pads 11a, 11b must have sufficient strength and integrity to withstand the forces acting on brake pads during braking, and as the vehicle to which the disc brake is fitted travels, e.g. over uneven surfaces.

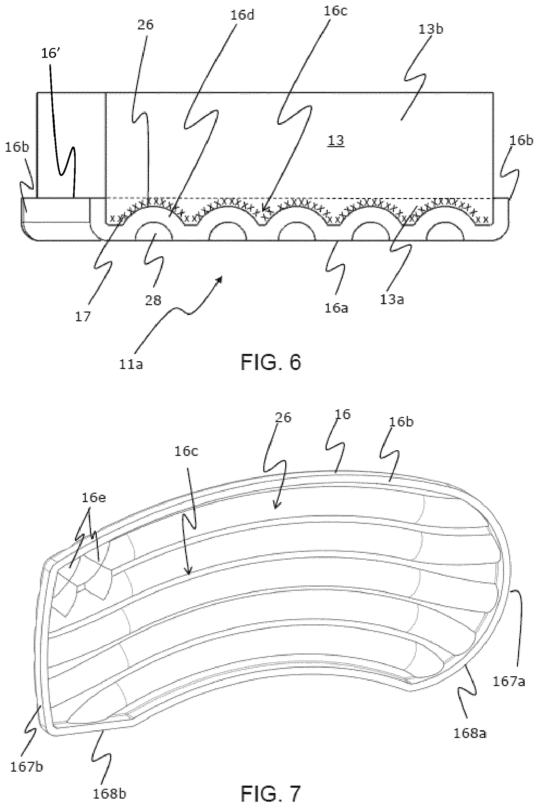

As shown in Figure 6 and 7, the strengthening backplate 16 comprises a rear wall 16a with an inner surface facing towards and for supporting the friction material 13 and an outer, opposing surface facing away from the friction material. When mounted for use, the inner surface faces the brake rotor 10 of the disc brake and the outer surface faces away from the rotor.

The strengthening backplate may comprise at least one stiffening flange extending from the inner surface side of the rear wall. The at least one stiffening flange may surround at least a perimeter portion of the rear wall. The stiffening effect of the flange helps to strengthen the backplate as well as increasing the area in contact with corresponding abutment surfaces of the disc brake 2.

In the embodiment depicted in Figures 3 to 7, the strengthening backplate comprises a stiffening peripheral flange 16b fully encircling the perimeter of the rear wall. The rear wall 16a defines a plane and the stiffening peripheral flange 16b extends substantially perpendicular from the inner surface side of the rear wall. First and second circumferential portions 167a, 167b of peripheral flange define the first and second circumferential surfaces 77a, 77b of the brake pad. First and second radial portions 168a, 168b of the peripheral flange define the first and second radial surfaces 78a, 78b of the brake pad.

The rear wall and at least one stiffening flange form a trough on the friction material side of the brake pad. In the embodiment depicted, the rear wall 16a and peripheral flange 16b define a trough 16c having a tub shape.

The trough is configured to accommodate at least one functional component of the brake pad. The functional component may be selected from a bonding to bond the friction material to the backplate, a thermal insulator to inhibit the transfer heat from the friction material into the backplate of the brake pad, and a noise dampener to absorb noise generated by the brake pad and/or to alter the resonant frequency of the brake pad. The bonding may comprise a steel mesh around which the friction material may be formed.

The trough may additionally accommodate a rear portion of friction material.

In the embodiment depicted in Figures 3 to 7, the friction material is attached to the inner surface of the rear wall 16a using a friction material bonding 17. As shown, a rear portion 13a of the friction material and layer of friction material bonding 17 is located in the trough 16c of the backplate, whilst a front portion 13b of the friction material protrudes from the backplate. The rear portion may be a wear limit portion of the friction material and the outer edge of the flange 16' may define a wear limit of the friction material.

The trough is substantially filled by the at least one functional component (e.g. a bonding, thermal insulator and/or noise dampener), and optionally the rear portion of the friction material. Substantially filling the trough enhances the stiffening of the at least one flange and reduces the risk of plastic deformation during operation. By substantially filling the trough, the friction material at the circumferential surfaces of the backplate follows substantially the same profile as the backplate 16. The friction material is stepped back from the outer perimeter of the backplate by the thickness of the at least one flange. The at least one flange provides additional mechanical contact between the friction material and the backplate, aids bonding and reduces the risk of the friction material becoming separated from the backplate during braking. Further, by filling the trough, the risk of water and other foreign matter entering a gap between the at least one flange and the friction material etc. and causing corrosion is minimised.

By recessing the at least one functional component (e.g. a bonding, thermal insulator and/or noise dampener), and optionally a rear portion of the friction material in the backplate, the thickness of sacrificial friction material in the brake pad that may be worn away in operation can be increased and the lifespan of the brake pad improved.

The backplate 16 may alternatively or additionally comprise at least one stiffening rib to help strengthen the backplate. The at least one stiffening rib is configured to help strengthen the backplate with respect to the forces acting on the brake pad during use. The forces may include, for example, a retaining force from a retainer, an applied load of the piston, an applied clamping force, a drag braking force induced between the friction material and rotor, and/or abutment forces from the abutment surfaces. The at least one stiffening rib may also be configured to change the eigen frequency of the backplate and thereby help to reduce the generation of squeal noise during operation.

The at least one stiffening rib may comprise a recess and/or ridge arranged on the rear wall. The rib may comprise a recess formed in the rear wall 16a of the backplate, preferably on the outer surface of the rear wall. The recess may have any suitable cross-sectional profile including for example, a curved profile, flat-bottomed profile or saw-tooth profile. Preferably, a rib recess shaped on one surface of the rear wall forms a corresponding rib ridge on the opposing surface of the rear wall. For example, a rib recess formed on the outer surface of the rear wall forms a corresponding rib ridge on the inner surface of the rear wall. The ridge may aid the attachment of the insulator, noise dampener and/or friction material in the trough.

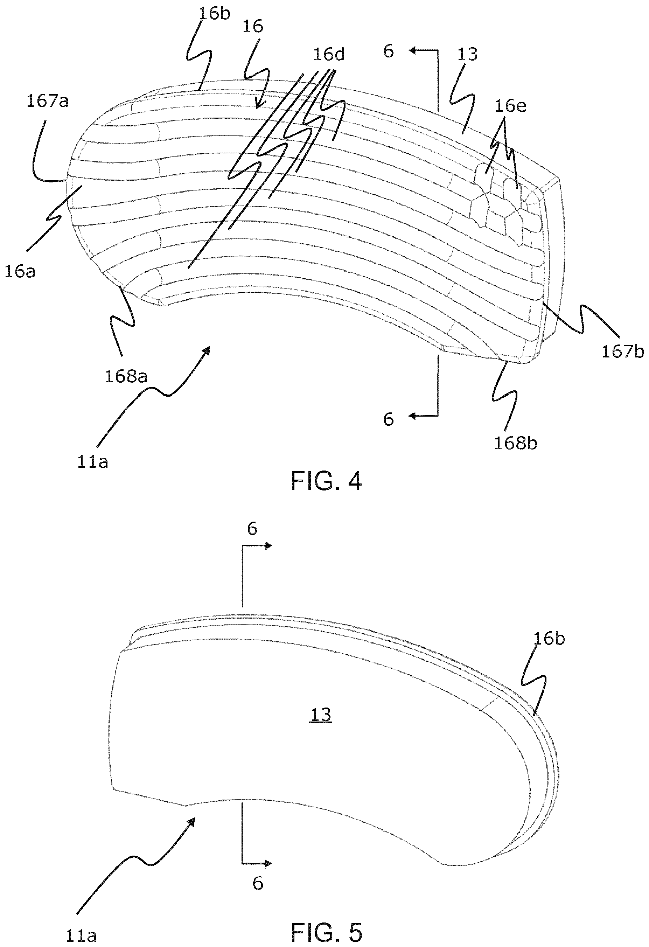

In the embodiment depicted in Figures 3 to 7, the backplate 16 comprises a plurality of elongate stiffening ribs 16d formed in the rear wall 16a to help strengthen the backplate. As shown in the Figures 4, 6 and 7, the ribs are elongate ridges 26 arranged on the inner face of the rear wall facing the friction material 13 and corresponding recesses 28 arranged on the outer face of the rear wall. The ridges 26/recesses 28 have a cross-sectional curved profile.

In this particular embodiment, the elongate stiffening ribs 16d are configured to help strengthen the backplate with respect to an applied load of the piston, an applied clamping force, a drag braking force induced between the friction material and rotor, and/or abutment forces from the abutment surfaces. The elongate stiffening ribs are also configured to tune the backplate and improve its noise behaviour.

To improve the force distribution across the backplate the elongate stiffening ribs 16d extend across the full width of the rear wall 16a. To optimise the reaction of the brake pad to the drag brake force, the elongate stiffening ribs 16d are configured to follow the vector pathway of the tangential drag force acting across the rear wall. To counter abutting forces of the abutment surfaces acting on the brake pad, the elongate stiffening ribs 16d are configured to extend across the rear wall 16a between the first and second circumferential surface portions 167a, 167b of the peripheral flange and between the first and second radial surface portions 168a, 168b of the peripheral flange. To optimise the stiffening effect and help minimise plastic deformation of the backplate at the abutment interface, each stiffening rib is substantially perpendicular to the intersection between the rear wall and peripheral flange.

The backplate may further or alternatively comprise at least one stiffening rib formed in the rear wall that is configured to strengthen the backplate with respect to retaining forces applied by a brake pad retainer. The retaining forces generally act on a localised region of the backplate and so the at least one local stiffening rib is preferably arranged in the region of the rear wall adjacent to the brake pad retainer. To further strengthen the embodiment of the brake pad depicted in Figures 3 to 7 with respect to the retaining forces applied by the pad retainer plate 92, local stiffening ribs 16e are formed in a region of the rear wall adjacent the pad retainer. To optimise the stiffening effect and help minimise plastic deformation of the backplate by the pad retainer each stiffening rib is orientated to extend in a substantially perpendicular direction to the interface between the pad retainer plate 92 and rear wall.

The provision of the at least one flange and/or at least one stiffening rib allows for the thickness of the backplate material to be reduced whilst maintaining a backplate with sufficient strength and integrity to withstand the braking forces and travel forces acting on the vehicle in which the disc brake is fitted.

The enhanced stiffening effect of the at least one flange (e.g. peripheral flange 16b) and/or the at least one stiffening rib (e.g. stiffening ribs 16d, 16e) allows the backplate 16 to be formed from relatively thin sheet metal material.

The sheet metal material preferably has a thickness of approximately 4mm or less. The trough may preferably have a depth of between approximately 5mm to approximately 7mm. Backplates 16 can be formed from a sheet metal, e.g. sheet steel, having a thickness of between approximately 1mm to approximately 4mm, preferably approximately 3mm.

By using relatively thin sheet metal material the overall mass of the backplate is minimised, which in turn leads to environmental and costs benefits. Also, the backplate may be press-formed from the sheet metal material and cheap to manufacture.

In the embodiment depicted in Figures 3 to 7, the backplate 16 is press-formed from a sheet steel plate having a thickness of approximately 3mm, whereby the rear wall and peripheral flange are integrally formed from the same sheet of material as a starting point and the trough has a depth of approximately 7mm.

The backplate is preferably manufactured from a blank of sheet metal plate (normally coils of sheet metal plate) and press-formed between appropriate contoured dies in a press to form the at least one stiffening rib and/or at least one flange. The method of making the backplate comprises the initial step of cutting a blank from sheet metal. The method may further comprise the step(s) of pressing the blank to form ridges/recesses so as to define at least one stiffening ribs and/or drawing the blank in a press to turn the outer edges of the sheet metal to an angle approaching 90° so as to form the rear wall and at least one flange.

In other embodiments, the backplate can be cast, or formed using other suitable processes.

### Brake pad retraction

Figure 8 illustrates a brake pad according to the present invention mounted to a brake carrier. In this embodiment, like components are denoted by the same reference numerals as in the examples above, but with the prefix "2". Only differences with respect to the examples are discussed in detail.

In this embodiment, the carrier 204 supports both the inboard brake pad 211a and outboard brake pad 211b in complementary inboard and outboard pad support structures 269 and 270. The plate and bolt of the pad retainers are omitted for clarity.

As can be seen from Figure 8, the backplate 216 of the brake pad 211a has generally circumferentially extending stiffening ribs 216d described above that define recesses 228 in the rear face of the backplate opposing the friction material 213. Certain recesses 228 extend the full width of the backplate from the first circumferential surface 277a to the second circumferential surface 277b.

The brake pad 211a further comprises first and second resilient arms 282a and 282b. These arms 282a, 282b project in a generally circumferential direction from the backplate 216 and are arranged to rest inboard of corresponding abutment structures 272a, 272b that define the circumferential pad abutment surfaces 274a, 274b of the carrier 204. In this way, when the brake pad 211a is moved outboard by the actuation mechanism the arms flex and generate an opposite (lower) restoring force that urges the brake pad back in an inboard direction. Thus, when the actuation mechanism is released, the pad is actively retracted away from the rotor 10 by the arms 282a, 282b.

In order for this to be effective, it is necessary for the arms to be mounted (or be integral) to the backplate 216. The mounting at least ensures that when the arms 282a, 282b move inboard, the brake pad 211a is also caused to move inboard. In this embodiment the mounting is achieved by spot-welding the arms to the backplate. In other embodiments, the mounting may be via other forms of welding, gluing, riveting, press fitting, snap fitting, brazing, screws, bolts or other fasteners. In addition mounting may be achieved by plastically deforming one or both of the backplate and arms to cause physical engagement therebetween.

In this embodiment, the first and second resilient arms 282a and 282b are part of a single piece of wire 282 formed into a closed loop that is accommodated in two recesses 228 defined by two stiffening ribs extending the full width of the backplate between the first circumferential surface 277a and the second circumferential surface 277b.

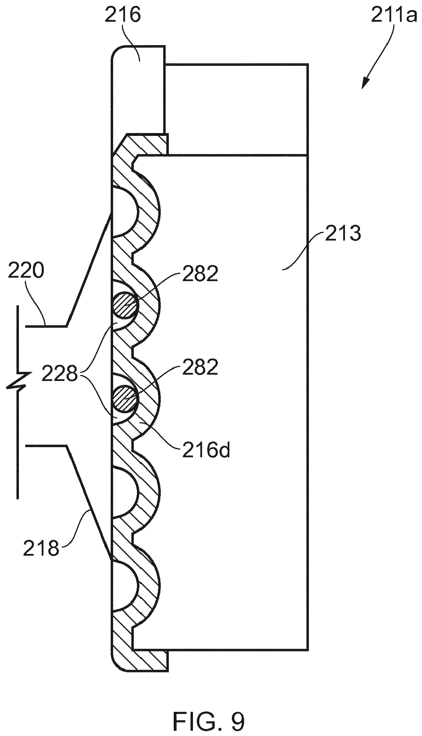

With particular reference to Figure 9, which is a vertical cross-section through the brake pad 211a of Figure 8, it can be seen that the wire 282 has substantially circular cross-section and is dimensioned such that it does not project beyond the rear face of the backplate 216. As such, a head 218 of a piston 220 that is arranged to actuate the brake pad 211a and bring it into contact with the rotor during a braking operation, contacts the rear face and therefore spreads the brake force over a maximal area thereof.

Whilst the wire 282 in this embodiment has a circular cross-section and the recesses 228 are substantially semi-circular, it will be appreciated that suitable alternative shapes may be employed and that the profile of either or both may be different at different locations.

In heavy vehicles brake pads, the friction material 213 may be 20mm or more thick. Therefore, as the friction wears away, the backplate 216 is required to move by a similar distance, which in turn requires the resilient arms to flex by a significant amount. The amount of elastic deflection may be maximised in this embodiment by mounting the wire 282 to the backplate 216 proximate to the centre of the backplate only. This is particularly achievable when the pad is being actuated by a single piston disc brake, as contact between the piston and pad may only be proximate the centre of the pad.

In other circumstances, for example if the disc brake is a twin-piston brake or a spreader plate is interposed between the piston and backplate, or the pad is mounted outboard rather than inboard, or indeed with single piston brakes, the wire may flex beyond its elastic limit and deform plastically. In this instance there would be a residual amount of elastic force generated by the wire 282 to "pull" the brake pad 211a back clear of the rotor.

Whilst the description above has been in relation to the inboard brake pad 211a, it will be appreciated that a similar arrangement may be provided on the outboard brake pad 211b provided it is mounted to a carrier as in Figure 8, rather than directly to a caliper.

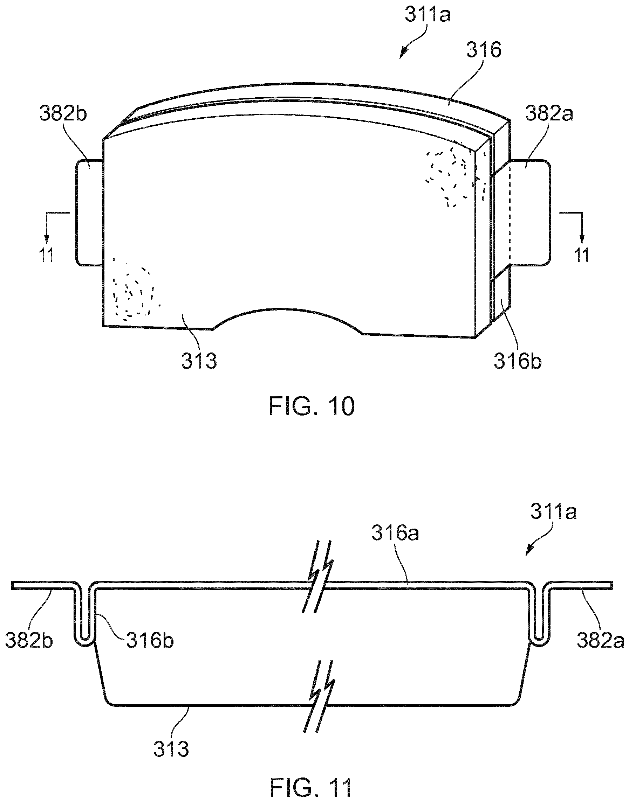

Figures 10 and 11 show a brake pad 311a of another embodiment of the present invention. In this embodiment, like parts are denoted by like numerals, but with the prefix "3" and only differences are discussed below.

In this embodiment, the backplate 316 of the brake pad 311a is formed as a sheet metal pressing with a rear wall 316a and peripheral flange 316b encircling the perimeter of the rear wall and extending substantially perpendicular to the rear wall. The brake pad 311a of this embodiment is of a more conventional shape to the brake pad 211a, having parallel circumferential surfaces and radial surfaces at right angles thereto.

The resilient arms 382a, 382b in this embodiment are integrally formed from the same sheet of metal as the backplate 316. This is achieved by providing an extra "tongue" of material in a blank to form the backplate that is folded back 180° on the peripheral flange 316b and is folded at approximately 90° to be in substantial alignment with the rear face of the backplate and form each of the arms 382a and 382b that may engage behind the abutment structures in a similar way to that depicted in Figure 8.

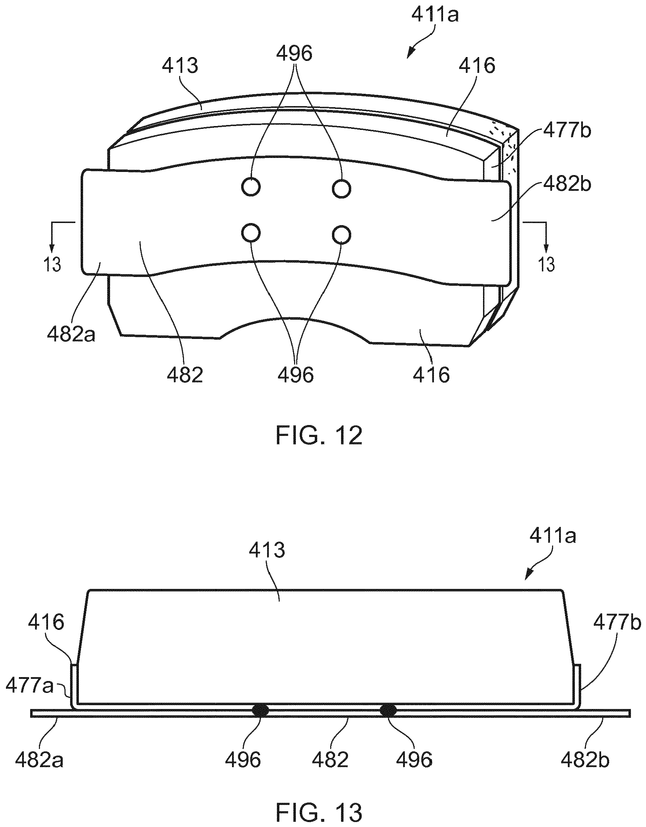

Figures 12 and 13 illustrate a further embodiment of brake pad 411a of similar shape and pressed structure to the pad 311a. In this embodiment a separate metal sheet 482 e.g. of spring steel is mounted to the backplate 416 by spot welds 496. The sheet 482 extends beyond the circumferential surfaces 477a and 477b of the brake pads to define the resilient arms 482a and 482b. The spot welds 496 are located close to the circumferential midpoint of the brake pad 411a, thereby permitting the sheet 482 to flex significantly before reaching its elastic limit.

The sheet 482 is in this embodiment approximately 1mm thick, so does not increase the thickness of the pad significantly.

In other embodiments, a sheet or sheets may however be shaped so as to be mounted within recesses only in the backplate similar to the wire of Figure 8. Alternatively, two separate sheets may be mounted to the backplate 416 proximate the circumferential surfaces only.

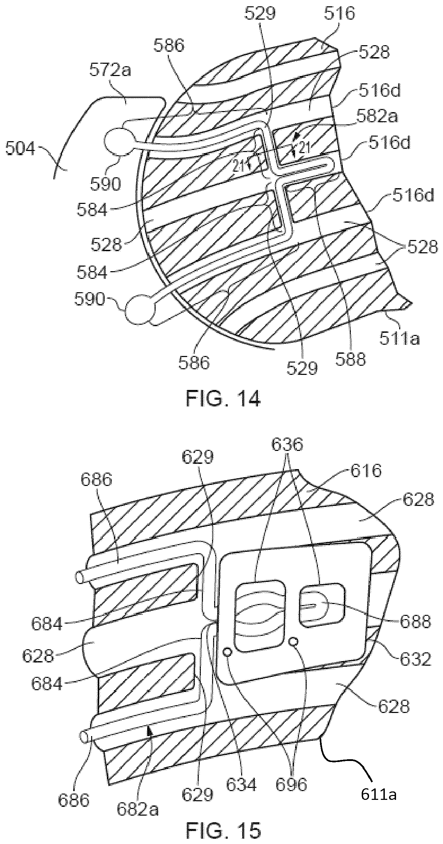

Figure 14 illustrates a portion of a brake pad according to a fourth embodiment of the present invention. This embodiment differs from the first in that the first and second arms are separate and mounted independently to the backplate 516. Only first arm 582a is shown, but the second arm is configured similarly, as is the case for the fifth to eighth embodiments below. Each of these embodiments has similar parts labelled by the same numerals, but with a prefix that increases by 1 in each subsequent embodiment.

In addition the first resilient arm 582a differs from that of the first embodiment in that it comprises two generally radially extending torsion portions 584. The torsion portions are arranged to provide a torsional resilience to urge the brake pad away from the rotor. This torsional resilience may be in addition to or as an alternative to flexural or bending resilience that may be provided in circumferentially extending portions of the arm 586 (depending upon the material used for these and its thickness.) In this embodiment the two torsion portions 584 are substantially coaxially aligned and of a similar length, but in other embodiments may be laterally offset and/or of differing length. By altering one or both of these parameters the retraction force applied by the circumferential portions may be individually adjusted to allow for an even retraction of the brake pad 11a in use.

The arm of this embodiment is formed from wire having a circular cross-section, however the circumferentially extending portions 586 of this embodiment terminate in pads 590 of enlarged surface area to reduce stresses at the end of the arm. In other embodiments the arm is a closed loop.

The use of torsional resilience in the arm may result in a more constant spring rate across the full range of deflection of the arm. In addition it may reduce stresses in the arm and allow for a more compact way of achieving the required deflection of the arm.

It can be seen that the torsion portions 584 are straight sections of wire in this embodiment, rather than helically coiled wire arranged to flex in a torsional manner. The arrangement of this embodiment of the present invention is chosen so that the torsion portion is compact and can be restrained by the backplate as described below.

A reaction portion 588 of the arm 582a is integral with and is additionally arranged to ground a first end of each torsion portion 584 on the brake pad. In this embodiment the reaction portion 588 extends circumferentially towards a midpoint of the brake pad 511a and is formed from a length of wire that is looped back on itself so that it interconnects the torsion portions 584. Thus it can be seen that torsion portion is arranged approximately at right angles to both the reaction portion 588 and circumferentially extending portion 586.

The reaction portion 588 is mounted to the backplate 516 and length of the reaction portion enables it to better counteract the forces imposed on it as the arm 582a deflects. The circumferentially extending portions 586 may be angled with respect to the reaction portion 588 in the plane of the backplate in order to preload the resilient arm and enhance the retraction force provided by the arms 582a once a braking operation has ceased.

The torsion portions 584 overlie the brake pad. In this embodiment the backplate is of the type shown in Figs 4 to 9, being formed from sheet metal material with stiffening ribs 516d extending generally circumferentially and providing recesses 528 in the rear of the backplate 516. In this embodiment the backplate 516 is provided with additional recesses 529 that extend radially to interconnect adjacent circumferential recesses 528 and which receive the torsion portions 584 within them. In this way, the arm 582a can be located such that it does not protrude beyond the rear face of the backplate 516.

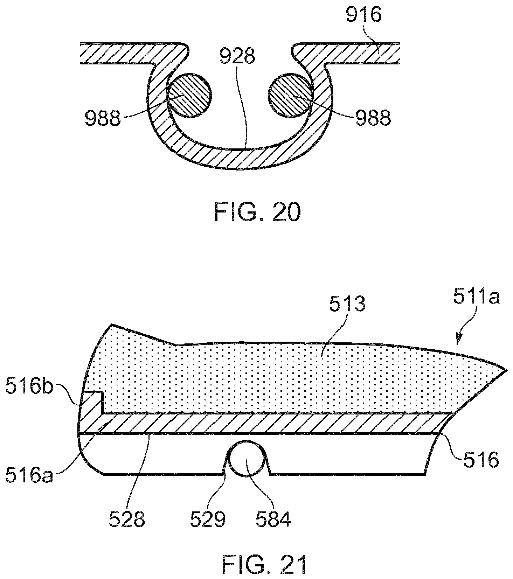

The transverse recesses 529 are dimensioned so the torsion portions 584 are held along at least part of their length in a form fitting relationship with the recesses. As illustrated in the cross-sectional view of Figure 21 the form fitting relationship may be an interference fit in which torsion portions 584 are press fitted into a secure engagement therewith. It may be desirable for this fit only to be used proximate the reaction portion, so the remainder of the torsion portions are able to twist under torsion in an unrestricted manner.

Figures 22A to 22C illustrate an alternative form fitting engagement in which in Figure 22A a recess 529' is first formed in the backplate 516 with additional material 530 left either side of the recess e.g. in a pressing operation. The reaction portion 584 is then placed in the recess 529' as shown in Fig 22B and the additional material 530 plastically deformed around the reaction portion in a reverse pressing operation as shown in Fig 22C. In one embodiment the pad may be supplied to the end user as shown in Figure 22B and the reverse pressing operation may be achieved by the first clamping application of the disc brake in use.

To further secure the arm 582a to the brake pad 511a the reaction formation may also or alternatively be mounted to the backplate in a form fitting engagement as above, or by welding, use of adhesive or suitable fasteners such as rivets.

Figure 15 shows a fifth embodiment of a brake pad 611a according to the present invention. This brake pad 611a has a similar shape of resilient arm 682a to the fourth embodiment. However, in this embodiment the resilient arm 682a is mounted to the backplate 616 by an additional plate 632 that is mounted over the reaction portion 688. The plate 632 together with the recess 628 define an aperture 634 into which the reaction portion 688 is received. In one embodiment, the plate is secured first, and the reaction portion 688 then inserted. In another embodiment, the resilient arm 682a is positioned on the backplate 616 and the plate then secured over the reaction portion 688. In this embodiment the plate 632 is secured by spot welds 696. Two holes 636 are provided in the plate 632 and the reaction portion 688 is shaped so that parts thereof engage the holes to further secure the resilient arm 682a in place, although this is not essential.

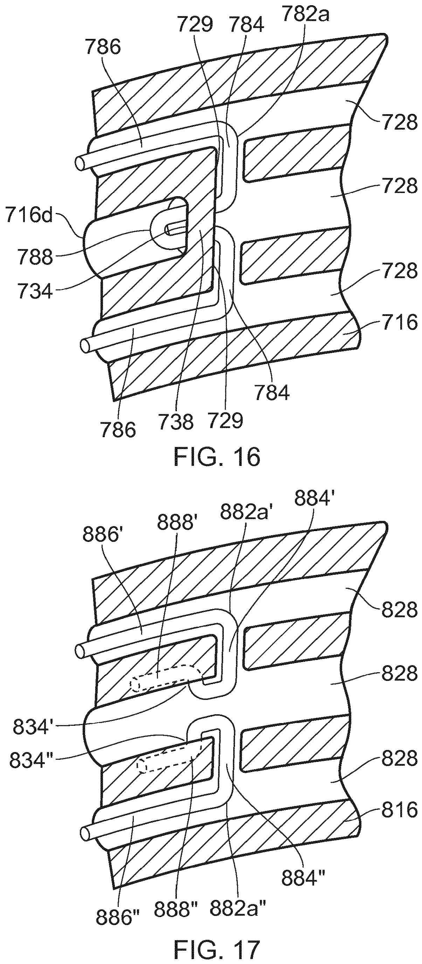

In the sixth embodiment of Figure 16 the reaction portion 788 extends in the opposite direction to that of the fifth embodiment, i.e. in a circumferentially outward direction. In this embodiment, the aperture 734 is formed by a separating a portion of the backplate material from the stiffening rib 716d. In other words a bridge portion 738 of the sheet metal of the backplate 716 is separated from the stiffening rib and bridges over the stiffening rib to define the aperture 734.

In the seventh embodiment of Figures 17 the reaction portion does not loop back on itself and consequently two separate arms 882a' and 882a" are mounted at the first circumferential end and each portion is designated with the suffix ' or " as appropriate.

Each arm 882a' and 882a" extends through a respective aperture 834' and 834" with a recess 828 between the torsion portions 884' and 884" and reaction portions 888' and 888" such that the reaction portions are located on the friction side of the backplate. The friction material may be moulded on to the backplate after the arms 882a' and 882a", and in which case the friction material may hold the arms in place.

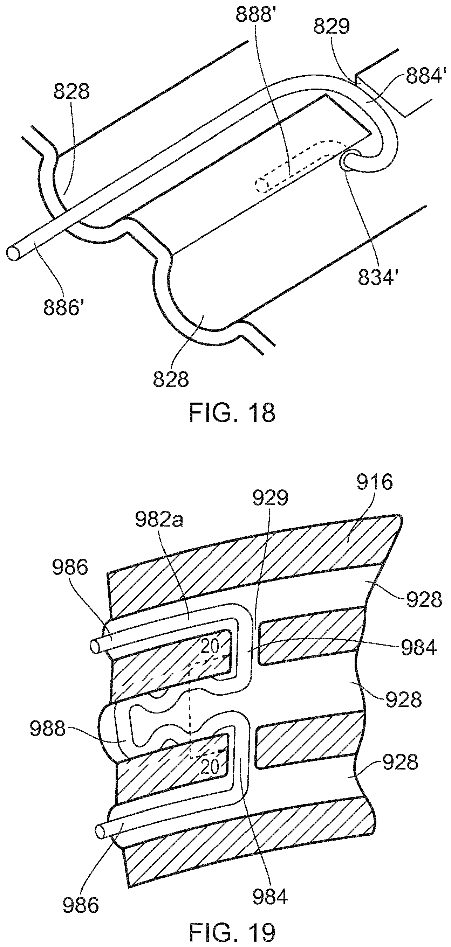

The eighth embodiment of Figures 19 and 20 depicts a reaction portion 988 that is shaped and dimensioned to resiliently bear against the sides of the recess 928. In particular the reaction portion has a wavy shape and the recess 928 has an undercut shape, so once the reaction portion 988 has relaxed therein it is resiliently held in place. The undercut shape may be continuous as depicted in Figures 19 and 20, or only shaped this way at the locations where the reaction portion bear against it. The undercut shape may be formed before fitting of the arm, as a result of the fitting of the arm (i.e. fitting of the arm causes the recess to deflect and conform around it), or in a subsequent pressing operation.

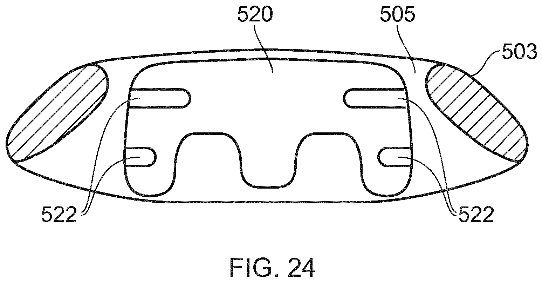

Figures 23 and 24 depict the movement of the frame 505 of the caliper 503 for a disc brake 502 with respect to the carrier 504, as the friction material 513 of the outboard brake pad 511b wears. The disc brake 502 differs from the disc brake 2 of Figure 1 in that the carrier 504 extends over the rotor and circumferentially supports the outboard brake pad 511b. The arrangement is shown in connection with the brake pad of the fourth embodiment, but also applicable to the pads of the first, second, third, fifth, sixth, seventh and eighth embodiments. In Figure 23, N shows the position of the rear of the brake pad 511b in a new, unworn state, and W depicts its position in a worn condition. The first resilient arm 582a is depicted in broken lines in the new condition and solid lines in the worn condition W. It is apparent that as the friction material wears and the frame displaces in the direction D, the circumferentially extending portion 586 pivots at an increasing angle with respect to the reaction portion 588 as the torsional twisting of the torsion portion 584 occurs.

The frame 505 has a substantially planar surface, commonly referred to as a cushion 520, that contacts the rear face of the outboard brake pad 511b and pushes the outboard brake pad in an inboard direction so as to clamp it against the rotor during a braking operation.

So as to accommodate the angular displacement of the circumferentially extending portions 588, the cushion 520 has circumferentially extending recesses 522 therein arranged at the correct radial height to receive them. In the inboard side, similar recesses or slots may be provided on a spreader plate or piston.

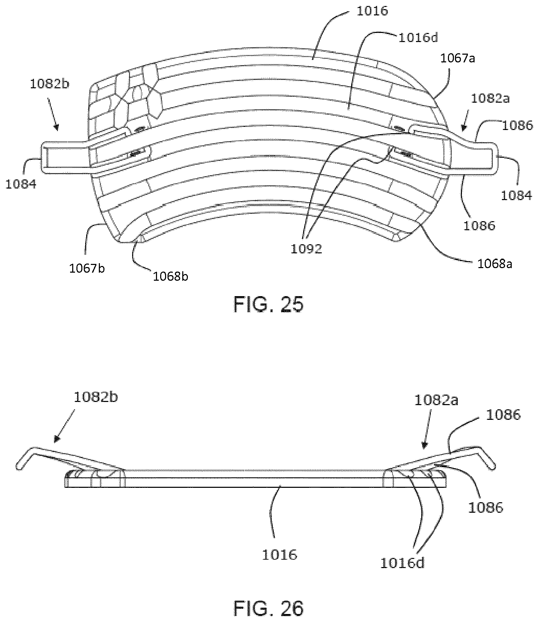

The ninth embodiment of Figures 25 and 26 shows a pad backplate similar to that of Figures 3 to 7 and Figure 14, that is distinguished by a further alternative first and second resilient arms, denoted by similar numerals but with the prefix "10" in this embodiment.

The resilient arms 1082a and 1082b of this embodiment differ from those of the previous embodiments in two important ways. Firstly, the torsion portion 1084 no longer overlies the backplate 1016, but instead is at the free end of the circumferentially extending portions 1086 and therefore is located outside of the footprint of the backplate. Secondly, the two circumferentially extending portions 1086 are mounted to the backplate 1016 about mounting portions 1092. The mounting portions 1092 are offset from each other in a circumferential or lateral direction. In other words one of the mounting points is closer to a circumferential midpoint of the pad than the other. The mounting portions 1092 act to allow the circumferentially extending portions to rotate in a plane that is generally defined by the circumferential and axial directions, i.e., the plane is generally horizontal.

The consequence of the offset arrangement is that as the resilient arms 1082a and 1082b are pivoted during the advance of the brake pad towards the rotor, the angle at which the individual circumferentially extending portions pivot differs, as can be seen most clearly in Figure 26.

By virtue of this differential pivoting, a torsional load is generated in the torsion portion 1084 by virtue of its role in connecting the first and second circumferentially extending portions at a distance from the mounting portions, and in this embodiment with its distance being at the circumferentially outermost ends of the circumferentially extending portions.

In this embodiment, the mounting portions 1092 are supported by a pair of apertures (not visible) that extend generally radially through the walls of adjacent stiffening ribs 1016d and therefore provide pivotable mounts for each of the mounting portions 1092. In order to retain the mounting portions within the support, the ends thereof may be flattened as depicted in Figure 25 so removal from the backplate 1016 is prevented. It will be appreciated that this arrangement enables the pivoting of the mounting portions to occur relatively freely, and that the resilience of the resilient arms is derived primarily, if not wholly, from the torsion portion 1084.

Further, the circumferentially extending portions 1086 are bent or angled part way along the length thereof, as can most readily be seen in Figure 26. This helps to ensure that as the resilient arms 1082a and 1082b pivot, and contact the corresponding surfaces of the carrier it is the torsion portions 1084 thereof that remain in contact with the carrier through this range of motion without affecting the spring rates or causing excess wear on contact points between the resilient arms and the carrier in the wrong location.

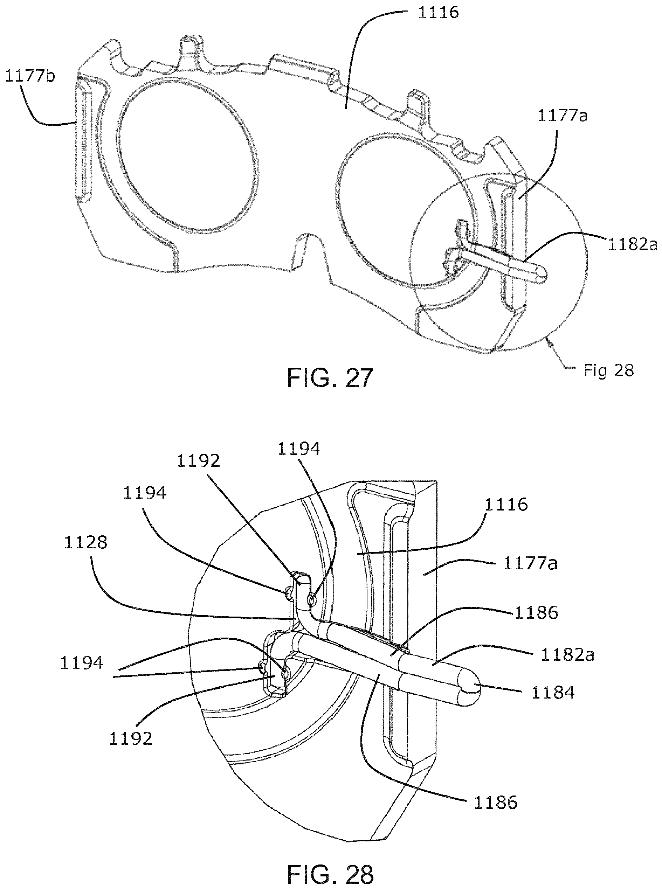

Figures 27 and 28 illustrate a similar resilient arm arrangement to Figures 25 and 26, but on a backplate formed by a casting process and which is generally thicker than the backplate of Figures 25 and 26. In Figure 27 only one resilient arm 1182a is shown, but in practice a further arm would be provided on the other circumferential end of the backplate. Like components are denoted by similar reference numerals to preceding embodiments, but with the addition of the prefix "11".

In this embodiment, specific recesses 1128 are cast into the backplate 1116 in order to accommodate the desired shape of resilient arms 1182a. In this embodiment, the circumferentially extending portions 1186 are arranged adjacent each other and therefore the torsion portion 1184 is short. Further, the mounting portions 1192, of course remain offset in order to generate torsion in the torsion portion 1184. In this embodiment the mounting portions 1092 extend in a generally radial direction away from each other in contrast to the arrangement of Figure 25.

To hold the mounting portions 1192 within the recess 1128, in this embodiment pips or projections 1194 from the surface are cast into the backplate adjacent to the recess 1128. When the resilient arms 1182a are fitted, these pips 1194 are then peened or coined over the mounting portions 1192. This results in material extending over the mounting portions in order to hold the resilient arms in place. Once deformed over the mounting portions 1192, it will be appreciated that the resilient arms 1182 and the pips 1194 do not project beyond the rear face of the backplate when in the rest position.

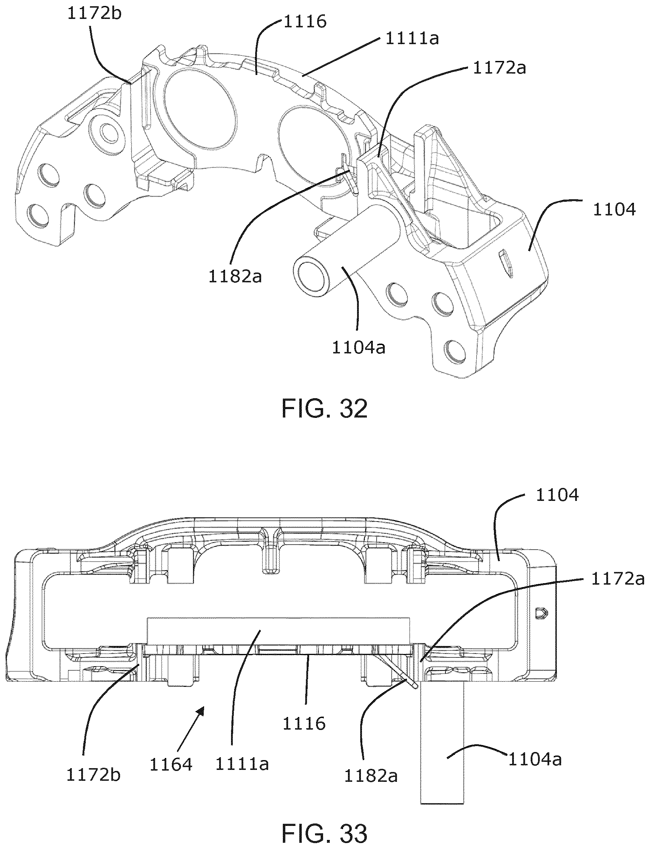

Further, although it can be seen that the backplate 1116 has two raised circular portions on the rear face thereof intended to the contacted by corresponding pistons of the disc brake actuation mechanism (not shown), even when the arm is deflected at maximum wear of the friction material (see Figures 32 and 33) this does not affect the interface between the piston and backplate.

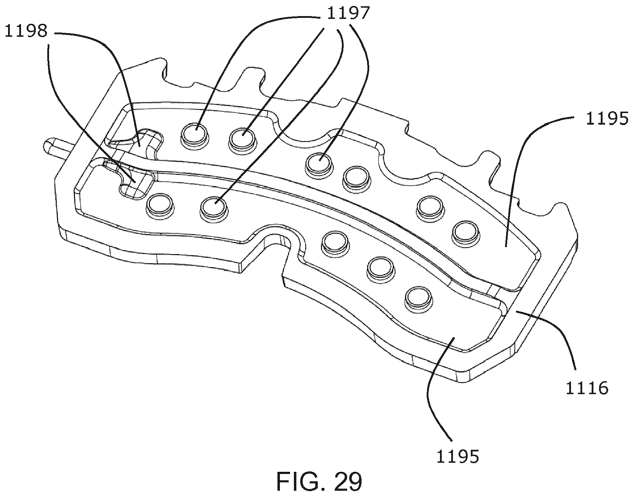

Figure 29 shows the friction side of the backplate 1116 without any friction material present thereon. It can be seen that the backplate on this side has a pair of depressions 1195 from which a plurality of friction material keying features 1197 project. It can be seen from Figure 29 that the recess 1128 from the rear of the backplate causes there to be mounds 1198 in the depressions 1195. These mounds maintain the separation between the front and rear of the backplate, but do not extend forward of the front face of the backplate and therefore do not restrict the amount of friction material that may be worn away in operation.

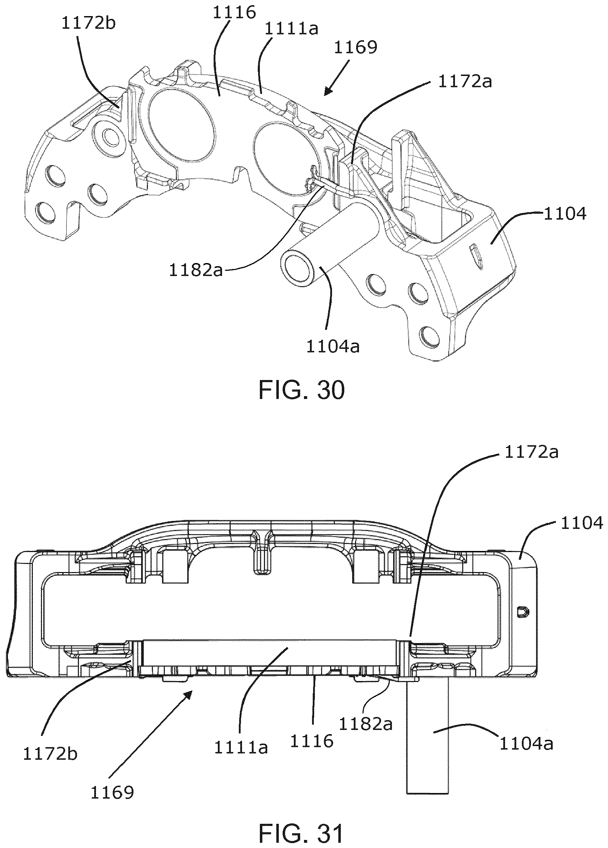

Figures 30 and 31 illustrate the position of the brake pad 1111a incorporating the backplate 1116 in an unworn position. It can be seen that the resilient arm 1182a has substantial overlap with its corresponding abutment structure 1172a and further does not interfere with the guide pin 1104a upon which a caliper (not shown) can slide in an inboard-outboard direction as discussed above.

Figures 32 and 33 illustrate the same pad 1111a and carrier 1104 with the brake pad at its position when fully worn (although note that the friction material is still depicted as being unworn). In these figures it can be seen that the resilient arm 1182a remains in contact with the abutment structure 1172a and still does not interfere with the function of the guide pin 1104a. It should be noted that, although not depicted in Figures 32 and 33, a corresponding second resilient arm would in practice be provided on the opposite circumferential end of the backplate 1116 and further there would be another guide pin in a corresponding location on the abutment structure 1172b, and again the resilient arm would not foul or otherwise impair operation of the guide pin.

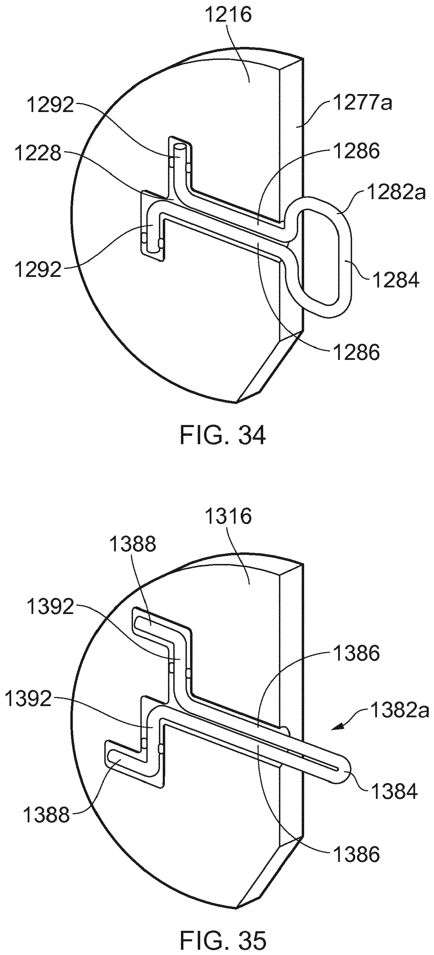

Figures 34, 35 and 36 all show variants of the resilient arm 1182a according to eleventh, twelfth and thirteenth embodiments of the present invention respectively. These variants are shown to illustrate ways in which the degree of torsional resilience of the resilient arms may be adjusted or "tuned" for a particular application, in order to provide the desired degree of pad retraction force.

Referring to Figure 34, the first resilient arm 1282a differs from that of the tenth embodiment in that the torsion portion 1284 is substantially longer in the radial direction thereby reducing the spring rate of the resilient arms and potentially placing less strain on the torsion portion by comparison with the tenth embodiment. Furthermore, the longer torsion portion may serve to reduce the pressure on the corresponding carrier abutment structures and may therefore reduce wear.

The embodiment of Figure 35 reintroduces an equivalent of the reaction portions 1388 from the embodiments of Figures 14 and 15, for example. As such, in addition to torsion being generated by the torsion portion 1384 at the circumferentially outer ends of the circumferentially extending portions 1386, torsion is also generated in the mounting portions 1392 at the circumferentially inner ends of the circumferentially extending portions. This may increase the overall spring rate.

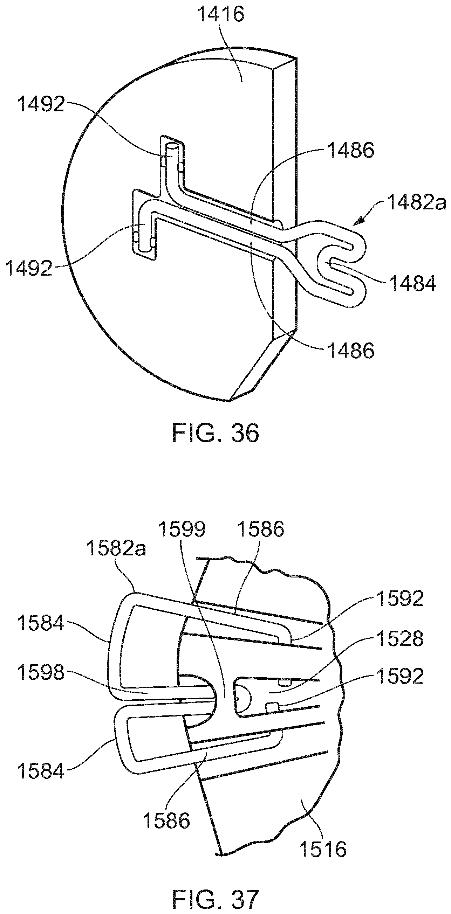

In Figure 36 the resilient arm 1482a is reconfigured so that the torsion portion 1484 is no longer at the circumferentially outer most ends of the circumferentially extending portions 1486. Rather these portions loop back on themselves to set the torsion portion 1484 in from the outer most circumferential end. This may have a further effect in terms of altering the overall spring rate of the resilient arm 1482a.

Figure 37 shows a further variant of a resilient arm 1582a for mounting to a pressed backplate similar to those depicted in Figures 25 and 26 for example. This embodiment differs from that of Figures 25 and 26 in that a loop 1598 of the resilient arm 1582a separates the torsion portion 1584 in two and extends back so as to overlap the backplate 1516. The loop projects into a central recess 1528 and a bridge portion 1599 extends over the recess 1528 to receive the loop 1598. This loop may provide a further way in which the torsional resilience of the resilient arm 1582a can be adjusted.

Depending on the location of the bridge 1599 and the amount of play or clearance between the bridge and the loop, the resilient arm 1582a may exhibit a combination of torsional resilience up to a predetermined deflection, before the loop 1598 grounds on the bridge 1599, and thereafter the arm may exhibit a resilience in bending of the loop.

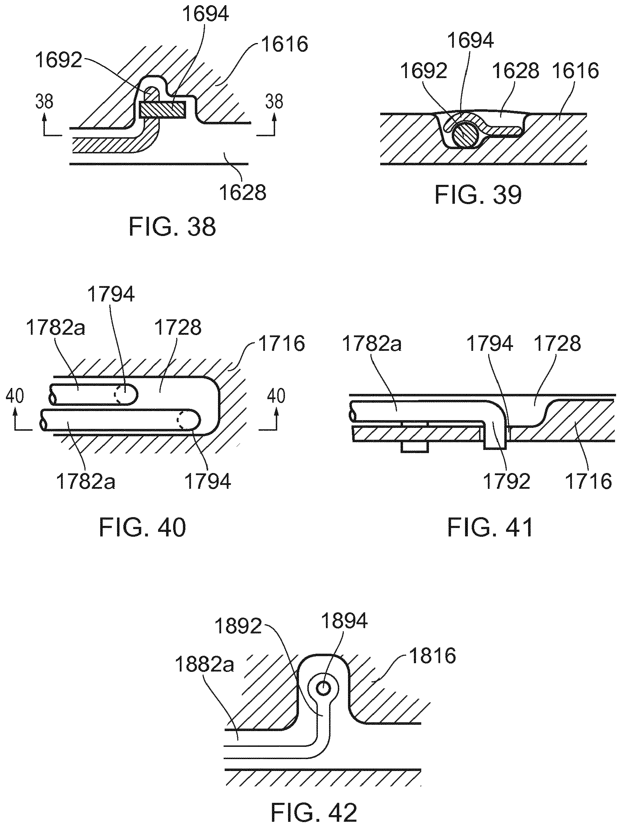

Figures 38 to 42 illustrate alternative mechanisms by which the mounting portions of the arms may be secured to the backplate.

In Figures 38 and 39 a shaped thin metal sheet 1694 is spot-welded to the backplate 1616 to retain the mounting portion 1692 in place, whilst permitting pivoting thereof.

In Figures 40 and 41 apertures 1794 are provided through the backplate 1716 in a direction substantially parallel to the direction in which the brake paid advances towards the rotor. The mounting portions 1792 of the arm 1782a project through the apertures and are hooked behind the backplate to be held thereto whilst also permitting a pivoting movement.

In Figure 42 the mounting portion 1892 is spot welded directly to the backplate 1816 at a free end thereof. The free end is thinned by comparison with the remainder of the resilient arm 1182a in order to permit the spot weld 1894 to be achieved. It will be appreciated that in this embodiment the mounting portion 1892 is also placed into torsion by deflection of the resilient arm 1182 as the friction material wears away and the brake pad advances towards the rotor.

In a further embodiment (not shown) the resilient arms may be mounted to the carrier abutments in one of the ways described above for pad mounting, and the arms are arranged to extend over an engage a formation in the pad backplate that enables the arms to engage and resiliently retract or "pull" the pad away from the rotor. The formation may be in the form of one or more hooks provided in the backplate within which the resilient arms may readily engage during fitting of the brake pads

It will be understood that numerous changes may be made within the scope of the present invention. For example the backplate may be of a conventional or stamped type. The brake pad backplate may not have a flange around its entire perimeter.

## Claims

1. A brake pad for a heavy vehicle disc brake, the brake pad comprising a layer of friction material having a friction face for contacting and retarding rotation of a rotor, the brake pad defining a first circumferential surface and a second opposing circumferential surface for contact with first and second corresponding circumferential pad abutment surfaces of first and second pad abutment structures of a disc brake in use;
the brake pad further comprising first and second resilient arms projecting in a generally circumferential direction from the friction material and being arranged to contact the first and second corresponding pad abutment structures so as to urge the brake pad in a direction away from the rotor when the brake pad is urged towards the rotor during application of the brake.

2. A brake pad according to claim 1 wherein at least one of the first and second resilient arms comprises a generally radially extending torsion portion arranged to provide torsional resilience to urge the brake pad away from the rotor.

3. A brake pad according to claim 2 wherein the radially extending torsion portion overlies the brake pad,
optionally wherein the radially extending torsion portion is located beyond the extent of the brake pad.

4. A brake pad according to claim 2 or claim 3 wherein at least one of the first and second resilient arms comprises first and second circumferentially extending portions mounted to the brake pad for pivoting about first and second axes offset in a generally circumferential direction and wherein the torsion portion connects the circumferentially extending portions at a location remote from both axes;
optionally wherein the torsion portion is located at an opposite end of the circumferentially extending portions from the first and second axes;
optionally wherein the at least one resilient arm further comprises a mounting portion arranged to mount the resilient arm to the brake pad;
optionally wherein the mounting portion defines an axle extending in the same direction as the axis of rotation of the circumferentially extending portion.

5. A brake pad according to any of claims 2 to 4 further comprising a reaction portion arranged to ground a first end of the torsion portion on the brake pad;
optionally wherein two torsion portions are provided;
optionally wherein the reaction portion connects the two torsion portions, optionally wherein the two torsion portions are substantially coaxially aligned.

6. A brake pad according to any preceding claim further comprising a backplate secured to a face of the friction material opposing the friction face so as to increase the flexural strength of the brake pad, and wherein the first and second resilient arms are mounted to the backplate.

7. A brake pad according to any preceding claim wherein the brake pad has a rear face opposing the friction face and the rear face comprises a recess therein, the recess at least partially accommodating at least part of at least one of the resilient arms;
optionally wherein the recess is dimensioned such that at least one of the resilient arms is held to the recess in a form fitting relationship, e.g. an interference fit;
optionally wherein the recess is plastically deformed so as to hold the at least one arm therein,
optionally wherein the at least one resilient arm is shaped for resiliently mounting to the recess.

8. A brake pad according to claim 6 wherein the backplate comprises an aperture and the at least one arm is held within the aperture;
optionally wherein the aperture is a through aperture in the backplate from a non-friction side to a friction side of the backplate; or
wherein the aperture is defined by an additional component, e.g. a plate, mounted to the backplate,
optionally wherein the recess and the arm are dimensioned such that the portion of the arm accommodated by the recess does not project beyond the rear face of the brake pad.

9. A brake pad according to claim 8, wherein the mounting portion defines an axle extending in the same direction as the axis of rotation of the circumferentially extending portion and wherein the recess comprises a stiffening rib of the backplate;
optionally wherein the backplate comprises a plurality of stiffening ribs and the arm is formed so as to be at least partially accommodated in recesses defining the stiffening ribs;
optionally wherein the stiffening rib extends generally circumferentially across the full width of the backplate and the first and second arms are formed from a single piece of material at least part of which is accommodated in the recess.

10. A brake pad according to claim 9 wherein two stiffening ribs extend the full width of the backplate and the arms are formed from a single piece of material at least part of which is accommodated in the two stiffening ribs.

11. A brake pad according to any preceding claim wherein the arms comprise wire material e.g. having a circular cross-section.

12. A brake pad according to any preceding claim wherein at least one of the arms are mounted to the brake pad by at least one of welding, gluing, riveting, press fitting, clip-fitting, snap fitting, plastic deformation of one or both of the arms or brake pad to cause physical engagement therebetween or brazing.

13. A brake pad according to claim 6 wherein the backplate is formed from sheet metal material;
optionally wherein the backplate comprises a rear plate supporting the friction material and a peripheral flange extending around the perimeter of the rear plate and arranged substantially normal thereto.

14. A heavy vehicle disc brake incorporating a brake pad according to any of claims 1 to 13.

15. A heavy vehicle disc brake according to claim 14 wherein the disc brake comprises a caliper having a support portion arranged to support a rear face of the brake pad during a braking operation, the portion having a recess in a region of at least one of the first and second arms arranged so as to receive the arm as the brake pad advances towards the friction material and the arm is caused to deflect;
optionally wherein the caliper comprises a bridge portion arranged to extend over a brake rotor and support an outboard brake pad, and wherein the support portion is a surface of a bridge portion arranged to face the rotor.
